# EUROPÄISCHE PATENTSCHRIFT

(11) **EP 1 507 990 B1**
(45) Veröffentlichungstag und Bekanntmachung des Hinweises auf die Patenterteilung: **16.04.2008**
(21) Anmeldenummer: 03729938.5
(22) Anmeldetag: 25.04.2003
(51) Int. Cl.: F16H 15/38

(54) **STUFENLOS REGELBARES REIBROLLEN-TOROIDGETRIEBE**
INFINITELY VARIABLE FRICTION ROLLER TOROIDAL TRANSMISSION
ENGRENAGE TOROIDAL A GALETS DE FRICTION REGLABLE DE FACON CONTINUE

(30) Priorität: 25.05.2002 DE 10223425
(43) Veröffentlichungstag der Anmeldung: 23.02.2005
(73) Patentinhaber: Bayerische Motoren Werke Aktiengesellschaft, 80809 München (DE)
(72) Erfinder: GINGLAS, Eduard, 86199 Augsburg (DE)
(86) Internationale Anmeldenummer: PCT/EP2003/004309
(87) Internationale Veröffentlichungsnummer: WO 2003/100294

(56) Entgegenhaltungen:
- GB-A- 2 227 287
- US-A- 3 410 146

## Beschreibung

Die Erfindung betrifft ein stufenlos regelbares Reibrollen-Toroidgetriebe, umfassend zwei Variatorscheiben, die um eine gemeinsame Rollachse verdrehbar sind und die Laufbahnen aufweisen, die Teil der Umfangsfläche eines zur Variator-Rollachse konzentrischen Torus sind, und mehrere an den Laufbahnen anliegende Roller, die jeweils in einem Gehäuse drehbar gelagert sind, dem eine mit einem hydraulisch beaufschlagbaren Kolben verbundene Abstützung zugeordnet ist, wobei die Drehachse jedes Rollers um eine Achse verschwenkbar ist, die zur Mittelebene des Torus unter einem bestimmten Winkel (Castorwinkel) geneigt ist.

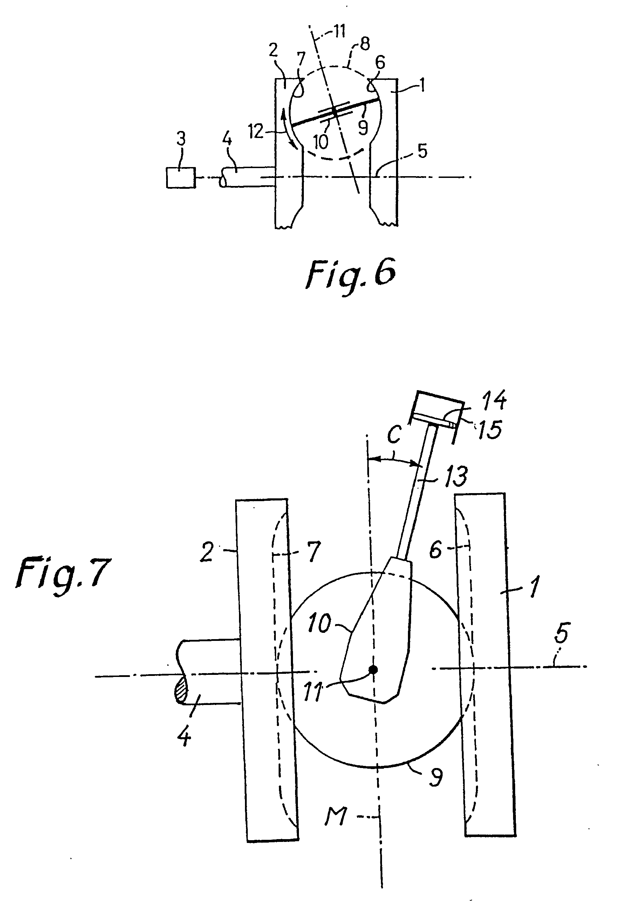

Ein herkömmliches Reibrollen-Toroidgetriebe dieser Gattung ist aus der GB 222 7287 bekannt und ist in den Fig. 6 und 7 der beiliegenden Zeichnungen in der Seitenansicht bzw. in der Draufsicht dargestellt. Fig. 6 zeigt eine Ausgangs-Variatorscheibe 1 und eine Eingangs-Variatorscheibe 2, die um eine gemeinsame Varioator-Rollachse 5 verdrehbar sind. Die Eingangs-Variatorscheibe 2 wird von einem Motor 3 über eine Welle 4 angetrieben. Die beiden Variatorscheiben 1 und 2 sind mit Laufbahnen 6 und 7 versehen, deren Flächen einem Teil der Umfangsfläche eines imaginären Torus entsprechen, dessen übriger Teil mit einer unterbrochenen Linie 8 angedeutet ist. Die Achse dieses imaginären Torus entspricht dabei der gemeinsamen Variator-Rollachse 5. Eine Gruppe von Rollern 9, die üblicherweise drei Roller umfaßt, die im gleichen Abstand um die Rollachse 5 herum angeordnet sind, liegen reibschlüssig an den Laufbahnen 6 und 7 an, um ein Drehmoment von der Eingangs-Variatorscheibe 2 auf die Ausgangs-Variatorscheibe 1 zu übertragen. In Fig. 6 ist einer dieser Roller 9 gezeigt, der mit Lagern in einem Gehäuse 10 gelagert ist, so dass er um eine Rollachse 11 rotieren kann. Wenn das Gehäuse 10 und damit der Roller 9 seine Orientierung ändert, indem es in Richtung des Pfeils 12 schwenkt, dann ändert sich offensichtlich auch das Verhältnis der Drehzahlen der beiden Variatorscheiben 1 und 2. Die Änderung des Neigungswinkels der Rollachse 11 in bezug auf die Rollachse 5 ermöglicht eine stufenlose Veränderung des Übersetzungsverhältnisses der Ausgangs-Variatorscheibe 1 zur Eingangs-Variatorscheibe 2. Eine Stange 13 verbindet das Gehäuse 10 mit einem Kolben 14, der in einem ortsfesten Hydraulikzylinder 15 axial beweglich und in begrenztem Umfang schwenkbar ist.

Ein solches stufenloses Getriebe arbeitet ordnungsgemäß, wenn eine Hydraulikflüssigkeit in dem Zylinder 15 eine Kraft auf den Kolben 14 ausübt, der im Gleichgewichtszustand die Reaktionskraft ausgleichen muß, die von dem resultierenden Drehmoment am Berührungspunkt des Rollers 9 und den Laufbahnen 6 und 7 herrührt. Der Roller 9 ändert seine Orientierung oder den Neigungswinkel seiner Drehachse 11 in Bezug auf die Variator-Rollachse 5, wenn die Gleichgewichtsbedingungen der anliegenden Kräfte nicht erfüllt sind.

Der Mittelpunkt des Rollers 9 muß stets dem Torusmittelkreis folgen, der wiederum in der Mittelebene M des Torus liegt. Die Stange 13, welche die Schwenkachse des Rollers 9 definiert, ist aus dem nachfolgend genannten Grund zu der Mittelebene M unter einem Winkel C geneigt. Damit der Roller 9 aufgrund seiner Freiheitsgrade eine stabile Übersetzungs-Position einnehmen kann, muß sich die Rollachse 11 des Rollers 9 mit der Rollachse 5 der Variatorscheiben 1 und 2 schneiden können. Bei einer Verstellung der Wirkrichtung der Stange 13 gerät der Roller 9 aus seiner stabilen Position und verstellt sich. Damit er wieder eine neue stabile Position einnehmen kann, ist der Winkel C zwischen der durch die Kolbenstange 13 definierten Schwenkachse des Rollers 9 und der Mittelebene M des von den Laufbahnen 6 und 7 bestimmten Torus erforderlich. Dieser als Castorwinkel bezeichnete Winkel C ermöglicht, dass aufgrund der kinematischen Gesetzmäßigkeiten die oben beschriebenen Rollachsen 11 der Roller 9 eigenständig wieder ihren Schnittpunkt mit der Variator-Rollachse 5 finden und eine stabile Lage erreicht wird. Dabei gilt die Gesetzmäßigkeit, dass die Selbststabilisierung des Rollers 9 mit steigendem Castorwinkel zunimmt. Der Umstand, dass die von dem Kolben 14 bewirkte Abstützkraft zur Mittelebene M des Torus um den Castorwinkel C geneigt ist, hat jedoch eine ungleichmäßige Anpreßkraft des Rollers 9 an den beiden Variatorscheiben 1 und 2 zur Folge. Diese ungleichmäßige Kraftverteilung nimmt mit steigendem Castorwinkel zu. Wie aus Fig. 7 hervorgeht, hat die von dem Kolben 14 über die Stange 15 ausgeübte Abstützkraft eine Komponente in Richtung der Variator-Rollachse 5. Der Roller 9 wird deshalb unter der von dem Kolben 14 ausgeübten Abstützkraft stärker an die Eingangs-Variatorscheibe 2 angepreßt als an die Ausgangs-Variatorscheibe 1. Um eine nahezu schlupffreie Kraftübertragung zwischen den Variatorscheiben 1, 2 und den Rollern 9 zu gewährleisten, ist eine bestimmte Mindestanpreßkraft erforderlich. Daher ist die kleinere Anpreßkraft für die Festlegung der Anpreßkraft der Variatorscheiben zueinander maßgeblich. Das bedeutet aber, dass die Roller 9 mit einer für eine ordnungsgemäße Kraftübertragung übermäßig großen Kraft an die Eingangs-Variatorscheibe 2 angepreßt werden, was zu deutlichen Verlusten des Wirkungsgrades führt.

Ein weiterer Nachteil der zur Mittelebene M des Torus geneigten Einleitung der Abstützkraft für die Roller besteht in einer ungünstigen Positionierung des Zylinders 15 im Getriebe, die sogar eine geknickte Ausführung der Stange 13 erforderlich machen kann. Eine solche geknickte Kolbenstange 13 hat aber zur Folge, dass auf den Kolben 14 ein Kippmoment ausgeübt wird. Der Erfindung liegt die Aufgabe zugrunde, ein gattungsgemäßes Reibrollen-Toroidgetriebe zu schaffen, bei dem die zur Abstützung der Roller erforderliche Kraft keine Komponente in Richtung der Variator-Rollachse hat.

Erfindungsgemäß wird diese Aufgabe dadurch gelöst, dass die Wirkrichtung der Abstützung jedes Rollers in der Mittelebene des Torus liegt, dass jeder Roller auf einem Schwenkkörper drehbar gelagert ist, und dass der Schwenkkörper in dem Gehäuse schwenkbar gelagert ist, wobei die Schwenkachse des Schwenkkörpers zur Mittelebene des Torus unter einem bestimmten Winkel (Castorwinkel) geneigt ist.

Die konstruktiv frei wählbare Winkelpositionierung der Schwenkachse des Schwenkkörpers zur Mittelebene des Torus ergibt die kinematische Voraussetzung, damit sich bei einer Verschwenkung des Schwenkkörpers die Rollachse des darauf gelagerten Rollers mit der Rollachse der Variatorscheiben schneiden kann. Durch die Trennung von Castorwinkel und Wirkrichtung der Abstützung jedes Rollers ist es möglich, die Wirkrichtung der Abstützung jedes Rollers in der Mittelebene des Torus zu positionieren. Dadurch ist eine gleichmäßige Kraftverteilung im Kontaktpunkt jedes Rollers mit den beiden Variatorscheiben möglich. Dies bedeutet eine Verringerung der Anpreßkraft der Variatorscheiben an die Roller und eine Erhöhung des Gesamt-Wirkungsgrades.

Zweckmäßige Weiterbildungen der Erfindung ergeben sich aus den Unteransprüchen.

Einige Ausführungsbeispiele der Erfindung sind in den Zeichnungen dargestellt und werden nachfolgend näher erläutert. Es zeigt:
Fig. 1 eine teilweise geschnittene Seitenansicht einer ersten Ausführungsform eines Reibrollen-Toroidgetriebes,
Fig. 2 eine Draufsicht auf das Getriebe nach Fig. 1,
Fig. 3 eine teilweise geschnittene perspektivische Darstellung des Getriebes nach Fig. 1, und
Fig. 4 eine Darstellung ähnlich wie Fig. 3, die aber eine abgewandelte Ausführungsform zeigt,
Fig. 5 eine Darstellung ähnlich wie Fig. 3, die aber noch eine andere Abwandlung zeigt,
Fig. 6 eine schematische Seitenansicht eines herkömmlichen Reibrollen-Toroidgetriebes, und
Fig. 7 eine schematische Draufsicht auf das Getriebe nach Fig. 6.

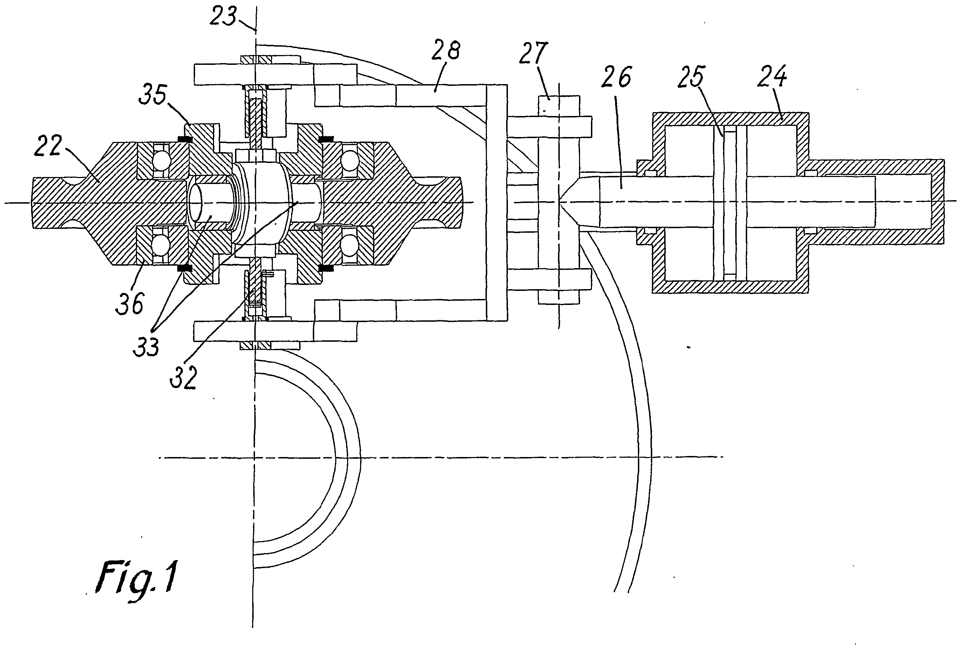

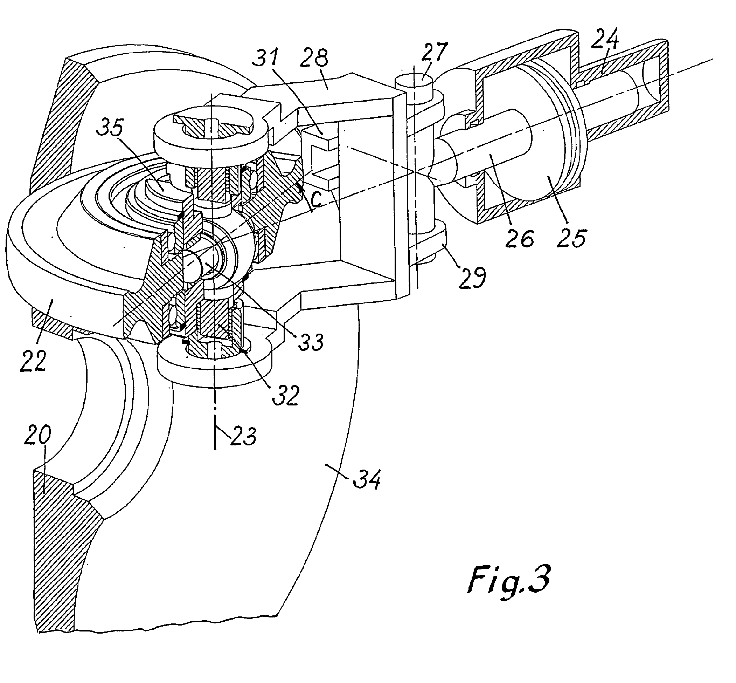

In den Fig. 1 bis 3 ist nur eine der beiden Variatorscheiben 20 eines Toriodgetriebes gezeigt, die um eine Variator-Rollachse 21 verdrehbar sind. Ferner ist nur einer von mehreren Rollern 22 gezeigt, der an der Laufbahn 34 der Variatorscheibe 20 anliegt und um eine Roller-Drehachse 23 drehbar ist. Wesentlich für die Erfindung ist die Art der Lagerung jedes Rollers 22 in dem zugeordneten Gehäuse und die Art der Abstützung des Gehäuses gegen die von dem Roller im Betrieb ausgeübte Reaktionskraft. Was die sonstigen konstruktiven und funktionellen Einzelheiten des Toroidgetriebes anbelangt, wird auf die einleitende Erläuterung der Fig. 6 und 7 verwiesen.

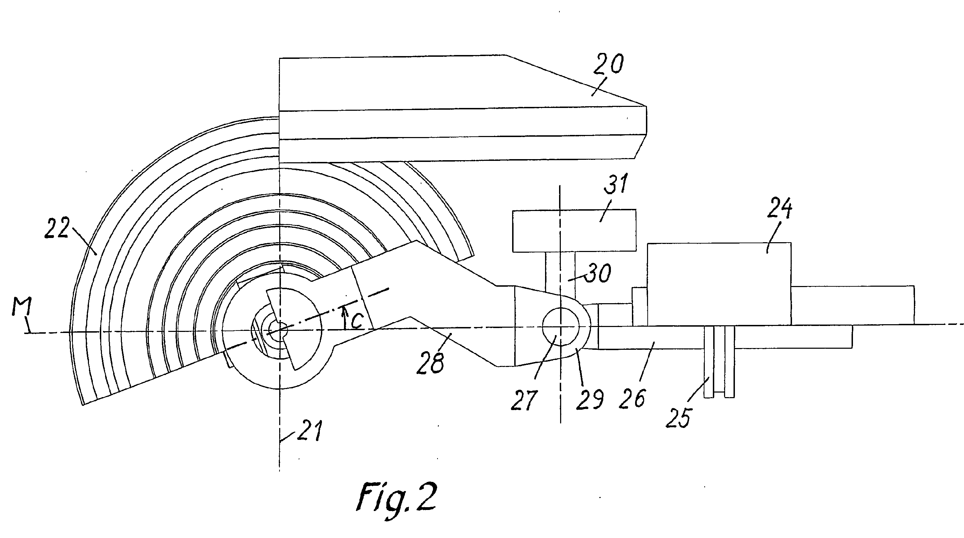

In einem ortsfest angeordneten Zylindergehäuse 24 ist ein Kolben 25 angeordnet, der beidseitig mit einer Hydraulikflüssigkeit beaufschlagbar ist. Der Kolben 25 ist auf einer Kolbenstange 26 befestigt, die auf beiden Seiten des Kolbens in dem Zylindergehäuse 24 axial verschiebbar geführt ist. Am Ende des aus dem Zylindergehäuse 24 herausragenden Teils der Kolbenstange 26 ist ein Gelenkbolzen 27 befestigt. Das Gehäuse des Rollers 22 umfaßt eine Gabel 28, die zwei vom Roller 22 abgekehrte Nasen 29 aufweist, die der Gelenkbolzen 27 drehbar durchsetzt. Wie aus Fig. 2 hervorgeht, liegt die von dem Gelenkbolzen 27 und den Nasen 29 definierte Schwenkachse der Gabel 28 in der Mittelebene M des Torus, und sie verläuft rechtwinklig zu der Kolbenstange 26. An dem Gelenkbolzen 27 ist ein Führungszapfen 30 befestigt oder mit diesem einstückig ausgebildet, der in eine ortsfest angeordnete Geradführung 31 eingreift. Diese Geradführung 31 verläuft parallel zur Kolbenstange 26 und erlaubt somit eine Axialverschiebung, verhindert aber eine Drehbewegung derselben. In der Gabel 28 ist ein Lagerbolzen 32 dreheinstellbar befestigt. Die Achse des Lagerbolzens 32 ist zur Achse des Gelenkbolzens 27 parallel, und sie liegt ebenfalls in der Mittelebene M des Torus. Wie aus Fig. 2 hervorgeht, liegen die Längsachse der Kolbenstange 26 und die Achse des Lagerbolzens 32 in der Mittelebene M des Torus. Der Lagerbolzen 32 ist mit zwei beidseitig abstehenden Lagerzapfen 33 versehen, deren gemeinsame Achse zur Mittelebene M des Torus unter einem bestimmten Winkel C, dem sogenannten Castorwinkel geneigt ist. Auf den beiden Lagerzapfen 33 ist ein Schwenkkörper 35 schwenkbar gelagert. Auf dem Schwenkkörper 35 ist mit einem Lager 36 der Roller 22 um die Drehachse 23 drehbar gelagert. Im Betrieb kann sich der Schwenkkörper 35 und damit der Roller 22 um die von den beiden Lagerzapfen 33 definierte Achse verschwenken, so dass sich die Drehachse 23 des Rollers 22 mit der Variator-Rollachse 21 schneiden kann, um den eingangs erwähnten stabilen Zustand zu gewährleisten.

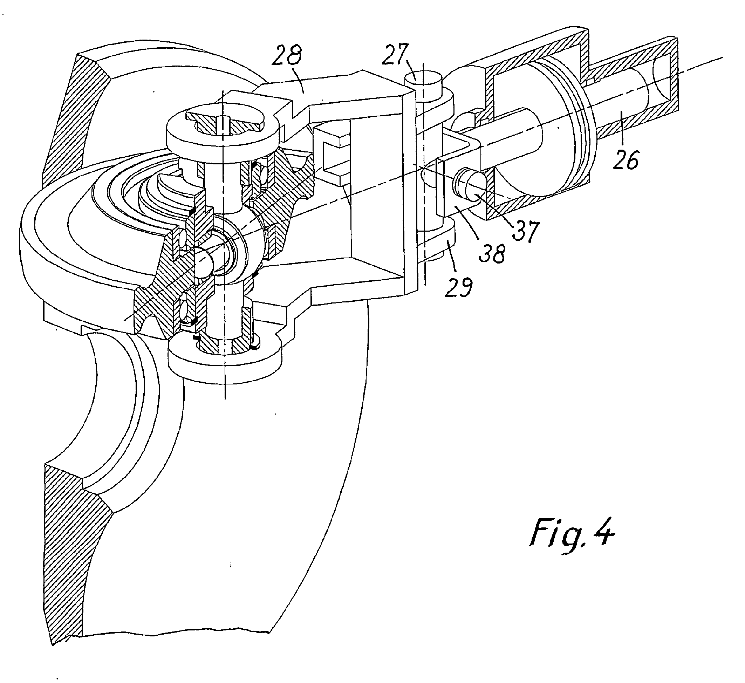

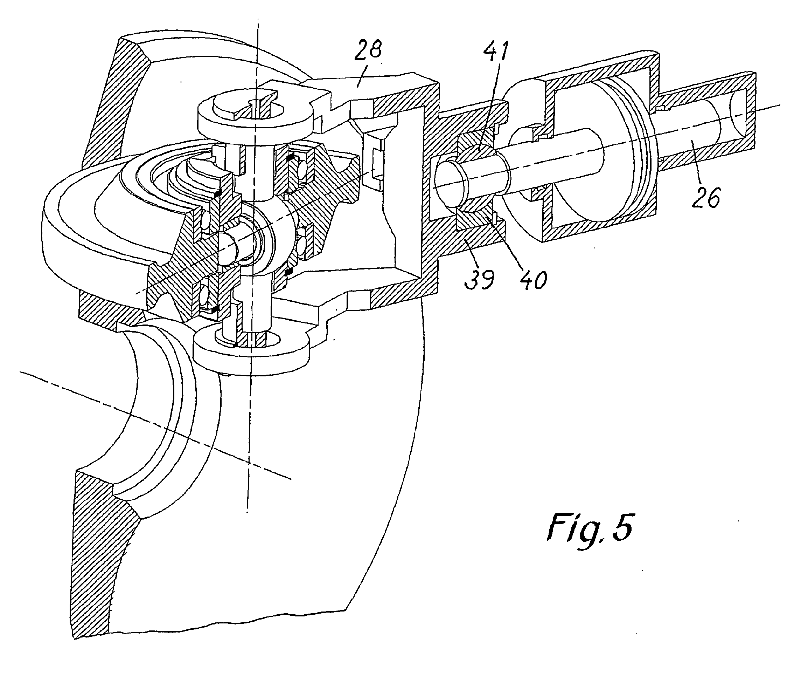

Die in den Fig. 4 und 5 gezeigte zweite und dritte Ausführungsform eines Toroidgetriebes unterscheidet sich von der in den Fig. bis 3 gezeigten und vorstehend beschriebenen Ausführungsform lediglich durch die Art der Gelenkverbindung der Kolbenstange 26 mit der Gabel 28.

Bei der in Fig. 4 gezeigten Ausführungsform ist die Kolbenstange 26 nicht unmittelbar an dem Gelenkbolzen 27 befestigt, sondern gelenkig mit diesem verbunden. Zu diesem Zweck ist der Gelenkbolzen 27 mit einem zu dem Führungszapfen 30 koaxialen Gelenkzapfen 37 versehen, und an der Kolbenstange 26 ist ein Bügel 38 befestigt, der mit dem Führungszapfen 30 und dem Gelenkzapfen 37 schwenkbar verbunden ist. Auf diese Weise wird ein Kardangelenk geschaffen, so dass sich die Gabel 28 um zwei Achsen verdrehen kann, die zur Mittelebene M des Torus parallel bzw. rechtwinklig sind.

Die in Fig. 5 gezeigte dritte Ausführungsform unterscheidet sich von der in Fig. 4 gezeigten zweiten Ausführungsform dadurch, dass das Kardangelenk durch ein Kugelgelenk ersetzt ist. In eine Nabe 39 der Gabel 28 ist ein Lagerkörper 40 mit konkaver Lagerfläche eingesetzt, in dem eine auf die Kolbenstange 26 aufgeschobene Kugel 41 drehbar gelagert ist. Die Gabel 28 ist daher in allen Richtungen verschwenkbar, aber durch die Geradführung 31 an einer Drehbewegung um die Achse der Kolbenstange 26 gehindert.

Wenn der Castorwinkel C, d. h. der Winkel zwischen der von den Lagerzapfen 33 definierten Schwenkachse und der Mittelebene M des Torus geändert werden soll, dann ist es lediglich erforderlich, den Lagerbolzen 32 in der Gabel 28 zu verdrehen und anschließend wieder zu sichern.

### Bezugszeichenliste:

- 1: Ausgangs-Variatorscheibe
- 2: Eingangs-Variatorscheibe
- 3: Motor
- 4: Welle
- 5: Variator-Rollachse
- 6: Laufbahn von 1
- 7: Laufbahn von 2
- 8: Restfläche des Torus
- 9: Roller
- 10: Gehäuse
- 11: Drehachse von 9
- 12: Schwenkrichtung von 10
- 13: Stange
- 14: Kolben
- 15: Hydraulikzylinder
- M: Mittelebene des Torus
- C: Castorwinkel
- 20: Variatorscheibe
- 21: Variator-Rollachse
- 22: Roller
- 23: Roller-Drehachse
- 24: Zylindergehäuse
- 25: Kolben
- 26: Kolbenstange
- 27: Gelenkbolzen
- 28: Gabel
- 29: Nasen
- 30: Führungszapfen
- 31: Geradführung
- 32: Lagerbolzen
- 33: Lagerzapfen
- 34: Laufbahn von 20
- 35: Schwenkkörper
- 36: Kugellager
- 37: Gelenkzapfen
- 38: Bügel
- 39: Nabe
- 40: Lagerkörper
- 41: Kugel

## Patentansprüche

1. Stufenlos regelbares Reibrollen-Toroidgetriebe, umfassend zwei Variatorscheiben (20), die um eine gemeinsame Rollachse (21) verdrehbar sind und die Laufbahnen (34) aufweisen, die Teil der Umfangsfläche eines zur Variator-Rollachse (21) konzentrischen Torus sind, und mehrere an den Laufbahnen (34) anliegende Roller (22), die jeweils in einem Gehäuse (28, 32) drehbar gelagert sind, dem eine mit einem hydraulisch beaufschlagbaren Kolben (25) verbundene Abstützung (26) zugeordnet ist, wobei die Drehachse (23) jedes Rollers (22) um eine Achse verschwenkbar ist, die zur Mittelebene (M) des Torus unter einem bestimmten Winkel (Castorwinkel C) geneigt ist, **dadurch gekennzeichnet, dass** die Wirkrichtung der Abstützung (26) jedes Rollers (22) in der Mittelebene (M) des Torus liegt, dass jeder Roller (22) auf einem Schwenkkörper (35) drehbar gelagert ist, und dass der Schwenkkörper (35) in dem Gehäuse (28, 32) schwenkbar gelagert ist, wobei die Schwenkachse des Schwenkkörpers (35) zur Mittelebene (M) des Torus unter einem bestimmten Winkel (Castorwinkel C) geneigt ist.

2. Toroidgetriebe nach Anspruch 1, **dadurch gekennzeichnet, dass** das Gehäuse aus einer mit der Abstützung 26 verbundenen Gabel (28) und einem mit dieser drehfest verbundenen Lagerbolzen (32) besteht, und dass der Lagerbolzen zwei beidseitig abstehende Lagerzapfen (33) aufweist, deren gemeinsame Achse zur Mittelebene (M) des Torus unter einem bestimmten Winkel (Castorwinkel C) geneigt ist, wobei der Schwenkkörper 35 auf dem Lagerzapfen 33 schwenkbar gelagert ist.

3. Toroidgetriebe nach Anspruch 1 oder 2, **dadurch gekennzeichnet, dass** die Abstützung aus einer mit dem Hydraulikkolben (25) verbundenen Kolbenstange (26) besteht, die zu einer Axialbewegung geführt und gegen eine Drehbewegung gesichert ist.

4. Toroidgetriebe nach Anspruch 3, **dadurch gekennzeichnet, dass** die Kolbenstange (26) in einem Zylindergehäuse (24) für einen beidseitig beaufschlagbaren Kolben (25) geführt ist.

5. Toroidgetriebe nach einem der Ansprüche 1 bis 4, **dadurch gekennzeichnet, dass** das Gehäuse (28, 32) mit der Abstützung (26) über ein Gelenk (27) verbunden ist, dessen Achse in der Mittelebene (M) des Torus liegt und zu der Wirkrichtung der Abstützung (26) rechtwinklig ist.

6. Toroidgetriebe nach einem der Ansprüche 1 bis 4, **dadurch gekennzeichnet, dass** das Gehäuse (28, 32) mit der Abstützung (26) über ein Kardangelenk (27, 37) verbunden ist, dessen eine Achse in der Mittelebene (M) des Torus liegt und zu der Wirkrichtung der Abstützung (26) rechtwinklig ist und dessen zweite Achse zur Mittelebene (M) des Torus und zur Wirkrichtung der Abstützung (26) rechtwinklig ist.

7. Toroidgetriebe nach einem der Ansprüche 1 bis 4, **dadurch gekennzeichnet, dass** das Gehäuse (28, 32) mit der Abstützung (26) über ein Kugelgelenk (40, 41) verbunden ist.

8. Toroidgetriebe nach einem der Ansprüche 2 bis 7, **dadurch gekennzeichnet, dass** der Lagerbolzen (32) mit der Gabel (28) dreheinstellbar verbunden ist, wobei die Einstell-Achse des Lagerbolzens mit der Rollachse (23) des Rollers (22) zusammenfällt.

## Claims

1. A steplessly adjustable friction roller toroidal drive comprising two variable speed gearwheels (20) rotatable around a common roller axis (21) and having tracks (34) forming part of the peripheral surface of a torus concentric with the variable speed gear roller axis (21), also comprising a number of rollers (22) adjoining the tracks (34), each roller mounted for rotation in a casing (28, 32) and associated with a support or abutment (26) connected to a hydraulically actuatable piston (25), wherein the axis of rotation (23) of each roller (22) is rotatable around an axis inclined at a defined angle (castor angle C) to the centre plane (M) of the torus, **characterised in that** the direction of action of the support (26) of each roller (22) lies in the centre plane (M) of the torus, each roller (22) is mounted for rotation on a pivoting member (35), and the pivoting member (35) is pivotably mounted in the casing (28, 32), wherein the pivoting axis of the member (35) is inclined at a defined angle (castor angle C) to the centre plane (M) of the torus.

2. A toroidal drive according to claim 1, **characterised in that** the casing comprises a fork (28) connected to the support (26) and co-rotatably connected to a bearing pin (32) and the bearing pin has a journal (33) projecting on each side, the common axis of the journals being inclined at a defined angle (castor angle C) to the centre plane (M) of the torus, wherein the pivoting member (35) is pivotably mounted on the bearing pin (33).

3. A toroidal drive according to claim 1 or claim 2, **characterised in that** the support comprises a piston rod (26) connected to the hydraulic piston (25) and guided in axial motion and secured against rotatory motion.

4. A toroidal drive according to claim 3, **characterised in that** the piston rod (26) is guided in a cylindrical casing (24) for a piston (25) actuatable at both ends.

5. A toroidal drive according to any of claims 1 to 4, **characterised in that** the casing (28, 32) is connected to the support (26) by a joint (27) whose axis lies in the centre plane (M) of the torus and perpendicuiar to the direction of action of the support (26).

6. A toroidal drive according to any of claims 1 to 4, **characterised in that** the casing (28, 32) is connected to the support (26) by a universal joint (27, 37) having one axis in the centre plane (M) of the torus and perpendicular to the direction of action of the support (26) and a second axis at right angles to the centre plane (M) of the torus and to the direction of action of the support (26).

7. A toroidal drive according to any of claims 1 to 4, **characterised in that** the casing (28, 32) is connected to the support (26) by a ball joint (40, 41).

8. A toroidal drive according to any of claims 2 to 7, **characterised in that** the bearing pin (32) is rotatably adjustably connected to the fork (28), wherein the axis of adjustment of the bearing pin coincides with the axis (23) of the roller (22).

## Revendications

1. Transmission toroïdale à galets de friction réglable en continu comprenant :
- deux disques de variateur (20) tournant autour d'un axe de roulement (21) commun et ayant des chemins de roulement (34), ces disques faisant partie de la surface périphérique d'un tore concentrique à l'axe de roulement (21) du variateur,
- plusieurs galets (22) appliqués contre les chemins de roulement (34) et montés chacun à rotation dans un boîtier (28, 32) auquel est associé un appui (26) chargé par un piston hydraulique (25),
l'axe de rotation (23) de chaque galet (22) pivotant autour d'un axe incliné d'un certain angle (angle de Castor C) par rapport au plan médian (M) du tore,
**caractérisée en ce que**
la direction d'action de l'appui (26) de chaque galet (22) se situe dans le plan médian (M) du tore,
chaque galet (22) est monté pivotant autour d'un organe de pivotement (35), et
l'organe de pivotement (35) est monté pivotant dans le boîtier (28, 32) et l'axe de pivotement de l'organe pivotant (35) est incliné par rapport au plan médian (M) du tore suivant un certain angle (angle de Castor C).

2. Transmission toroïdale selon la revendication 1,
**caractérisée en ce que**
le boîtier de transmission est formé d'une fourchette (28) reliée au moyen d'appui (26) et d'un goujon de palier (32) relié solidairement en rotation à la fourchette, et
le goujon de palier comporte deux tourillons de palier (33) venant en saillie des deux côtés et dont l'axe commun est incliné d'un angle déterminé (angle de Castor C) par rapport au plan médian (M) du tore, l'organe pivotant (35) étant monté pivotant sur le tourillon de palier (33).

3. Transmission toroïdale selon l'une des revendications 1 ou 2,
**caractérisée en ce que**
le moyen d'appui se compose d'une tige de piston (26) reliée à un piston hydraulique (25), cette tige étant guidée dans son mouvement axial et bloquée dans son mouvement de rotation.

4. Transmission toroïdale selon la revendication 3,
**caractérisée en ce que**
la tige de piston (26) est guidée dans un boîtier de cylindre (24) pour un piston (25) sollicité sur ses deux faces.

5. Transmission toroïdale selon l'une des revendications 1 à 4,
**caractérisée en ce que**
le boîtier (28, 32) est relié au moyen d'appui (26) par l'intermédiaire d'une articulation (27) dont l'axe se situe dans le plan médian (M) du tore et est perpendiculaire à la direction d'action du moyen d'appui (26).

6. Transmission toroïdale selon l'une des revendications 1 à 4,
**caractérisée en ce que**
le boîtier (28, 32) est relié au moyen d'appui (26) par une articulation de cardan (27, 37) dont un axe se situe dans le plan médian (M) du tore et est perpendiculaire à la direction d'action du moyen d'appui (26), le second axe étant perpendiculaire au plan médian (M) du tore et à la direction d'action du moyen d'appui (26).

7. Transmission toroïdale selon l'une des revendications 1 à 4,
**caractérisée en ce que**
le boîtier (28, 32) est relié au moyen d'appui (26) par l'intermédiaire d'une articulation à rotule (40, 41).

8. Transmission toroïdale selon l'une des revendications 2 à 7,
**caractérisée en ce que**
le goujon de palier (32) est relié à la fourchette (28) de manière réglable en rotation et l'axe de réglage du goujon de palier coïncide avec l'axe de roulement (23) du galet (22).
